# EUROPEAN PATENT APPLICATION

(11) **EP 4 322 008 A1**
(43) Date of publication of application: **14.02.2024**
(21) Application number: 23190428.5
(22) Date of filing: 08.08.2023
(51) Int. Cl.: G06F 11/16

(54) **INTEGRATED CIRCUIT AND PROCESSING METHOD FOR MEMORY ACCESS, ELECTRONIC DEVICE, AND MEDIUM**

(30) Priority: 09.08.2022 CN 202210953420
(71) Applicant: HORIZON (SHANGHAI) ARTIFICIAL INTELLIGENCE TECHNOLOGY CO., LTD., Shanghai 201306 (CN)
(72) Inventor: LIU, Qingyu, Shanghai, 201306 (CN); LI, Wenxing, Shanghai, 201306 (CN); LI, Jing, Shanghai, 201306 (CN); DENG, Bo, Shanghai, 201306 (CN); ZHOU, Yi, Shanghai, 201306 (CN); SHEN, Juncheng, Shanghai, 201306 (CN)
(74) Representative: DehnsGermany Partnerschaft von Patentanwälten

(57) **Abstract**

Disclosed are an integrated circuit and processing method for memory access, an electronic device, and a medium. The integrated circuit includes a first and second memory modules, and an access signal determining module respectively connected to the first and second memory modules. The access signal determining module includes: an interface circuit for transmitting a first memory access signal of a processor to the first memory module; an address filtering circuit for determining a target safety level corresponding to an access address of the first memory access signal; and an access signal processing circuit for offsetting the access address of the first memory access signal in response to the target safety level being a preset level, obtaining a second memory access signal based on the offset address, and transmitting the second memory access signal to the second memory module. Thus, a lower-safety-level memory can be accessed by a higher-safety-level function.

## Description

### FIELD OF THE INVENTION

This disclosure relates to semiconductor technologies, and in particular, to an integrated circuit and a processing method for memory access, an electronic device, and a medium.

### BACKGROUND OF THE INVENTION

In the field of intelligent driving, a DDR (Double Data Rate SDRAM (Synchronous Dynamic Random Access Memory)) of an intelligent driving chip is mainly used for a perception and prediction function of intelligent driving. A current requirement of this function for a functional safety level is ASILB (Automotive Safety Integrity Level B). However, with evolution of an algorithm of a control and decision-making function with a safety level of ASILD (Automotive Safety Integrity Level D) in an intelligent driving function, the algorithm of the control and decision-making function has increasingly greater requirements on computing power and storage. Development of implementing a control and decision-making algorithm by using a processor (or a core within the processor) and a RAM (Random Access Memory) may have a problem of insufficient storage. However, functional safety levels of current DDR controllers all are ASILB level, which cannot meet access requirements of a processor (or a processor core) with an ASILD, resulting in insufficient storage for a higher safety level corresponding to a function with a higher safety level.

### SUMMARY OF THE INVENTION

To resolve the foregoing technical problem of insufficient storage for a higher safety level required by a function with a higher safety level, this disclosure is proposed. Embodiments of this disclosure provide an integrated circuit and a processing method for memory access, an electronic device, and a medium.

According to an aspect of an embodiment of this disclosure, an integrated circuit for memory access is provided, including a first memory module, a second memory module, and an access signal determining module, wherein the access signal determining module is respectively connected to the first memory module and the second memory module, and the access signal determining module includes: an interface circuit, configured to transmit a first memory access signal of a processor accessing the first memory module to the first memory module; an address filtering circuit, connected to the interface circuit, and configured to determine a target safety level corresponding to an access address of the first memory access signal; and an access signal processing circuit, connected to the address filtering circuit, and configured to offset the access address of the first memory access signal in response to that the target safety level is a preset level, obtain a second memory access signal based on the offset address, and transmit the second memory access signal to the second memory module.

According to another aspect of an embodiment of this disclosure, a processing method for memory access is provided, including: transmitting a first memory access signal of a processor accessing a first memory module to the first memory module, and determining a target safety level corresponding to an access address of the first memory access signal; offsetting the access address of the first memory access signal in response to that the target safety level is a preset level, and obtaining a second memory access signal based on the offset address; and transmitting the second memory access signal to a second memory module.

According to still another aspect of an embodiment of this disclosure, a computer readable storage medium is provided, wherein the storage medium stores a computer program, and the computer program is used for implementing the processing method for memory access described in any one of the foregoing embodiments of this disclosure.

According to yet another aspect of an embodiment of this disclosure, an electronic device is provided, wherein the electronic device includes: a processor; and a memory configured to store processor-executable instructions, wherein the processor is configured to read the executable instructions from the memory and execute the processing method for memory access described in any one of the foregoing embodiments of this disclosure; or the electronic device includes the integrated circuit for memory access described in any one of the foregoing embodiments.

Based on the integrated circuit and the processing method for memory access, the electronic device, and the medium that are provided in the foregoing embodiments of this disclosure, a memory access operation with a preset level that is a relatively high safety level can be implemented through two memory access operations with lower safety levels, so that to-be-written data with a higher safety level can be written into two memory modules. Correspondingly, when data with a higher safety level is read, same data can be read from the two memory modules. Through consistency of access results for the two memory modules, functional safety of a function with a higher safety level is ensured, and a memory controller can also complete an access operation of the function with a higher safety level in a scenario that only a lower safety level is satisfied. Thus, a memory with a lower safety level can be used for a function with a higher safety level, so that the memory with a lower safety level can be accessed by the function with a higher safety level. In this way, greater storage support is provided for the function with a higher safety level on the basis of ensuring the functional safety, thereby effectively meeting storage requirements of the function with a higher safety level, and resolving problems such as insufficient storage for a higher safety level.

The technical solutions of this disclosure are further described below in detail with reference to the accompanying drawings and the embodiments.

### BRIEF DESCRIPTION OF THE DRAWINGS

By describing the embodiments of this disclosure more detailed with reference to the accompanying drawings, the foregoing and other objectives, features, and advantages of this disclosure will become more apparent. The accompanying drawings are used to provide further understanding of the embodiments of this disclosure, constitute a part of the specification, are used to explain this disclosure together with the embodiments of this disclosure, and do not constitute limitation to this disclosure. In the accompanying drawings, the same reference numerals generally represent the same components or steps.
FIG. 1 is an exemplary application scenario of an integrated circuit for memory access according to this disclosure;
FIG. 2 is a structural schematic diagram of an integrated circuit for memory access according to an exemplary embodiment of this disclosure;
FIG. 3 is a structural schematic diagram of an integrated circuit for memory access according to another exemplary embodiment of this disclosure;
FIG. 4 is a structural schematic diagram of a read channel module 24 according to an exemplary embodiment of this disclosure;
FIG. 5 is a structural schematic diagram of a read channel module 24 according to another exemplary embodiment of this disclosure;
FIG. 6 is a structural schematic diagram of a read channel module 24 according to still another exemplary embodiment of this disclosure;
FIG. 7 is a structural schematic diagram of a data comparison module 25 according to an exemplary embodiment of this disclosure;
FIG. 8 is a structural schematic diagram of a read channel module 24 according to yet another exemplary embodiment of this disclosure;
FIG. 9 is a structural schematic diagram of an access signal determining module 23 according to an exemplary embodiment of this disclosure;
FIG. 10 is a structural schematic diagram of an access signal processing circuit 233 according to an exemplary embodiment of this disclosure;
FIG. 11 is a structural schematic diagram of an access signal determining module 23 according to another exemplary embodiment of this disclosure;
FIG. 12 is a structural schematic diagram of an integrated circuit for memory access, which is combinatorial implementation, according to still another exemplary embodiment of this disclosure;
FIG. 13 is a schematic flowchart of a processing method for memory access according to an exemplary embodiment of this disclosure;
FIG. 14 is a schematic flowchart of a processing method for memory access according to another exemplary embodiment of this disclosure;
FIG. 15 is a schematic flowchart of a processing method for memory access according to still another exemplary embodiment of this disclosure;
FIG. 16 is a schematic flowchart of a processing method for memory access according to yet another exemplary embodiment of this disclosure;
FIG. 17 is a schematic flowchart of a processing method for memory access according to still another exemplary embodiment of this disclosure;
FIG. 18 is a structural schematic diagram of an electronic device according to an application embodiment of this disclosure; and
FIG. 19 is a structural schematic diagram of an electronic device according to another application embodiment of this disclosure.

### DETAILED DESCRIPTION OF THE EMBODIMENTS

Exemplary embodiments of this disclosure are described below in detail with reference to the accompanying drawings. Obviously, the described embodiments are merely a part, rather than all of embodiments of this disclosure. It should be understood that this disclosure is not limited by the exemplary embodiments described herein.

It should be noted that unless otherwise specified, the scope of this disclosure is not limited by relative arrangement of components and steps, numeric expressions, and numerical values described in these embodiments.

A person skilled in the art may understand that terms such as "first" and "second" in the embodiments of this disclosure are merely configured to distinguish between different steps, devices, or modules, and indicate neither any particular technical meaning, nor necessarily logical ordering among them.

It should be further understood that, in the embodiments of this disclosure, the term "multiple"/"a plurality of" may refer to two or more; and the term "at least one"/"at least a (an)" may refer to one, two, or more.

The embodiments of this disclosure can be applicable to a terminal device, a computer system, a server, and other electronic devices, which can be operated together with numerous other general-purpose or special-purpose computing system environments or configurations. Well-known examples of a terminal device, a computing system, and environment and/or configuration applicable to be used with the terminal device, the computer system, the server, and other electronic devices include but are not limited to: a personal computer system, a server computer system, a thin client, a thick client, a handheld or laptop device, a microprocessor-based system, a set-top box, programmable consumer electronics, a network personal computer, a small computer system, a mainframe computer system, and a distributed cloud computing technology environment including any of the foregoing systems.

### Overview of this disclosure

In a process of implementing this disclosure, the inventor finds that in the field of intelligent driving, a DDR of an intelligent driving chip is mainly used for a perception and prediction function of intelligent driving. A current requirement of this function for a functional safety level is ASILB. However, with evolution of an algorithm of a control and decision-making function with a safety level of ASILD in an intelligent driving function, the algorithm of the control and decision-making function has increasingly greater requirements on computing power and storage. Development of implementing a control and decision-making algorithm by using a processor (or a core within the processor) and a RAM may have a problem of insufficient storage. However, functional safety levels of current DDR controllers all are an ASILB level, which cannot meet access requirements of a processor (or a processor core) with an ASILD, resulting in insufficient storage for a higher safety level of a function with a higher safety level, such as the algorithm of the control and decision-making function.

### Exemplary overview

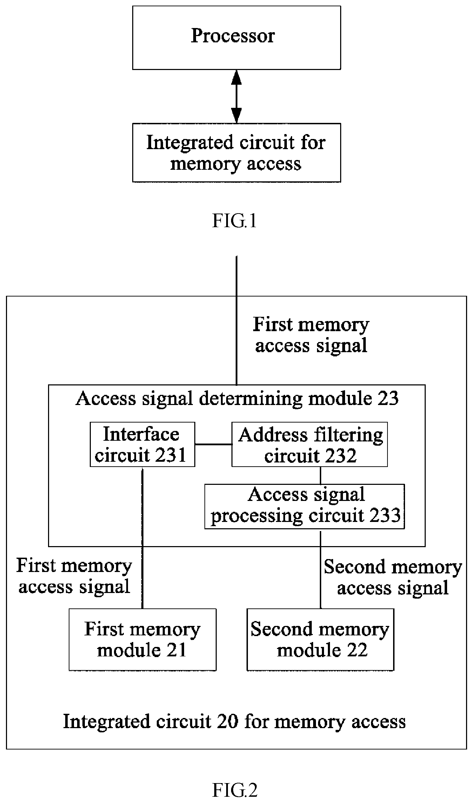

FIG. 1 is an exemplary application scenario of an integrated circuit for memory access according to this disclosure. In a functional scenario with a preset level (an ASILD level) for such as control and decision-making function of intelligent driving, by using the integrated circuit for memory access of this disclosure, a processor responsible for executing a corresponding algorithm of a control and decision-making function can access a DDR in a case of ensuring a functional safety level of ASILD of the functional scenario, so as to provide a more powerful storage capability for the functional scenario based on the DDR, thereby meeting increasingly growing requirements for storage of the functional scenario. The processor can be any possible processor or processor core within an intelligent driving chip, such as a central processing unit (CPU) or a graphics processing unit (GPU). This is not specifically limited. Specifically, the integrated circuit for memory access in this disclosure includes a first memory module, a second memory module, and an access signal determining module. The access signal determining module is respectively connected to the first memory module and the second memory module. The first memory module and the second memory module can be any two memory devices in the intelligent driving chip or can be two memory regions in a same memory device, such as two memory regions divided through address coding in the DDR within the intelligent driving chip. This can be specifically set according to actual requirements. The access signal determining module can transmit a first memory access signal of the processor accessing the first memory module to the first memory module; determine a target safety level corresponding to an access address of the first memory access signal; offset the access address of the first memory access signal in response to that the target safety level is a preset level (an ASILD level); obtain a second memory access signal based on the offset address; and transmit the second memory access signal to the second memory module. In this case, for memory access at the preset level, two memory modules may be accessed simultaneously. Memory access safety at the preset level is achieved through consistency of access results for the two modules. In this way, a storage capability can be provided for a functional scenario with the ASILD level based on a memory device having a great storage capability and with the ASILB level, thereby effectively resolving a problem of insufficient storage for a functional scenario with the ASILD level in an existing technology.

It should be noted that the integrated circuit in this disclosure is not limited to be applicable to the foregoing control and decision-making scenario of intelligent driving, but can be applicable to any scenario that requires a higher safety level according to actual requirements. This is not specifically limited.

### Exemplary apparatus

FIG. 2 is a structural schematic diagram of an integrated circuit for memory access according to an exemplary embodiment of this disclosure. This embodiment can be applicable to a functional scenario with a preset level to meet requirements for larger storage of the functional scenario with the preset level. As shown in FIG. 2, the integrated circuit 20 for memory access in this disclosure includes a first memory module 21, a second memory module 22, and an access signal determining module 23. The access signal determining module 23 is respectively connected to the first memory module 21 and the second memory module 22.

The access signal determining module 23 includes an interface circuit 231, an address filtering circuit 232, and an access signal processing circuit 233. The interface circuit 231 is configured to transmit a first memory access signal of a processor accessing the first memory module 21 to the first memory module 21. The address filtering circuit 232 is connected to the interface circuit 231, and is configured to determine a target safety level corresponding to an access address of the first memory access signal. The access signal processing circuit 233 is connected to the address filtering circuit 232, and is configured to offset the access address of the first memory access signal in response to that the target safety level is a preset level, obtain a second memory access signal based on the offset address, and transmit the second memory access signal to the second memory module 22.

The processor can be any possible processor or processor core within an intelligent driving chip, such as a central processing unit (CPU), a graphics processing unit (GPU), or a neural network processor. This is not specifically limited. The first memory module 21 and the second memory module 22 may be any two memory devices in the intelligent driving chip or two memory regions in the same memory device, such as two memory regions divided through address coding in a DDR within the intelligent driving chip. This can be specifically set according to actual requirements. The first memory access signal can be a read access signal or a write access signal. The preset level can be an ASILD level. The interface circuit 231 can be any implementable bus interface circuits, and can support bus protocols such as AXI (Advanced eXtensible Interface), AHB (Advanced High Performance Bus), APB (Advanced Peripheral Bus), and CHI (Coherent Hub Interface). This can be specifically set according to actual requirements. The interface circuit 231 can be connected to the processor through a corresponding bus to communicate with the processor. The interface circuit 231 is configured to receive the first memory access signal of the processor; and on one hand, transmit the first memory access signal to the first memory module 21 corresponding to the access address of the first memory access signal; and on the other hand, transmit the first memory access signal to the address filtering circuit 232. The address filtering circuit 232 is configured to determine the target safety level to which the access address of the first memory access signal belongs. Specifically, the target safety level of the access address of the first memory access signal can be determined in a preset address safety level partition manner. For example, an address range with an ASILD level and/or an address range with an ASILB level is preset, and the target safety level of the access address is determined by comparing the access address with the preset address range. A specific implementation manner of the address filtering circuit 232 can be set according to actual requirements, provided that the target safety level of the access address can be determined. The access signal processing circuit 233 is configured to offset the access address when the target safety level corresponding to the access address of the first memory access signal is the preset level (such as the ASILD level), determine the second memory access signal based on the offset address, and transmit the second memory access signal to the second memory module corresponding to the offset address, to access a memory corresponding to a corresponding address in the second memory module. There is a offset correspondence relationship pre-achieved through address coding between address ranges of the first memory module 21 and the second memory module 22. For example, the address range of the first memory module 21 is 0-2000, and the address range of the second memory module 22 is 2001-3000. The address 0 in the first memory module 21 corresponds to the address 2001 in the second memory module 22, and an address 1 in the first memory module 21 corresponds to an address 2002 in the second memory module 22. The others can be deduced by analogy. By offsetting an access address for accessing the first memory module 21 by 2001, a corresponding offset address in the second memory module 22 can be determined. An address range of 1001-2000 in the first memory module 21 can be used for storage at a lower safety level such as the ASILB. When the access address of the first memory access signal does not belong to the preset level (such as the ASILD level), there is no need for address offset, and a memory that is in the first memory module 21 and that corresponds to the access address is directly accessed. In this case, access requirements of a memory device with a lower safety level for different safety levels can be met.

For example, when the first memory access signal is a write access signal and the access address is at the preset level, target data to be written can be written to both the first memory module 21 and the second memory module 22 through the first memory access signal and the second memory access signal, respectively. When the first memory access signal is a read access signal for reading the target data, a piece of target data is also read from a corresponding address in the first memory module 21 through the first memory access signal, and a piece of target data is read from the second memory module 22 through the second memory access signal. On this basis, the two pieces of target data can be compared. If the two pieces of target data are consistent, it can be determined that the data is correct, or otherwise, corresponding measures can be taken, such as reporting a data error signal. This can be set according to actual requirements.

The integrated circuit 20 for memory access in embodiments of this disclosure can be referred to as an integrated circuit 20 for short.

Optionally, the integrated circuit in this disclosure can be connected to the processor through any implementable bus, such as AXI, AHB, APB, or CHI, so that the processor can access the first memory module 21 and the second memory module 22 through the bus.

According to the integrated circuit for memory access provided in this embodiment, a memory access operation with the preset level that is a relatively high safety level can be implemented through two memory access operations with lower safety levels, so that to-be-written data with a higher safety level can be written into two memory modules. Correspondingly, when data with a higher safety level is read, the same data can be read from the two memory modules. Through consistency of access results for the two memory modules, functional safety of a function with a higher safety level is ensured, and a memory controller can also complete an access operation with a higher safety level in a scenario that only a lower safety level is satisfied. Thus, a memory with a lower safety level can be used for a function with a higher safety level, so that the memory with a lower safety level can be accessed by the function with a higher safety level. In this way, greater storage support is provided for the function with a higher safety level on the basis of ensuring the functional safety, thereby effectively meeting storage requirements of the function with a higher safety level, and resolving problems such as insufficient storage for a higher safety level.

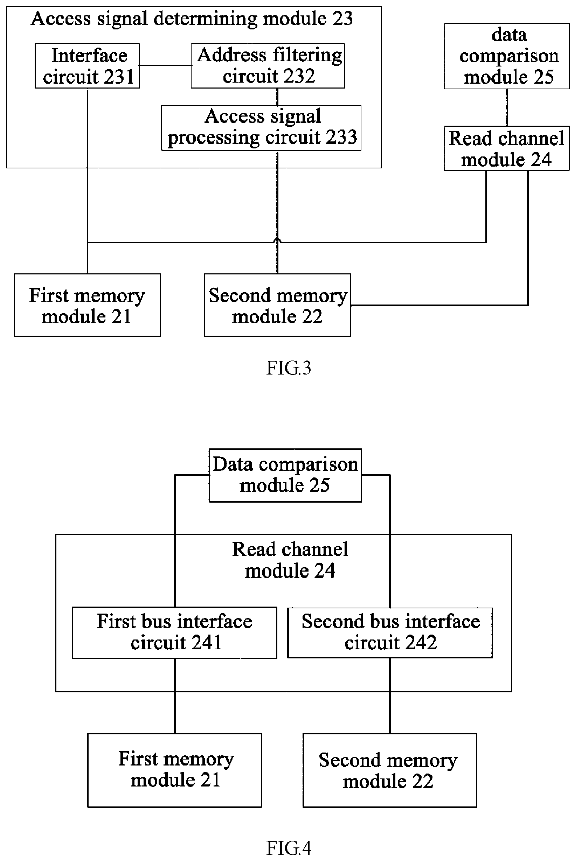

FIG. 3 is a schematic diagram of a structure of an integrated circuit for memory access according to another exemplary embodiment of this disclosure.

In an optional example, the integrated circuit 20 in this disclosure further includes a read channel module 24 and a data comparison module 25.

The read channel module 24 is configured to read first data from the first memory module 21 and read second data from the second memory module 22. The data comparison module 25 is configured to compare the first data with the second data, and determine a data error signal based on a comparison result.

The read channel module 24 is respectively connected to the first memory module 21 and the second memory module 22. When a first memory access signal is a read access signal, the first memory module 21 communicates with the read channel module 24 after the first memory access signal is transmitted to the first memory module 21. In this case, the read channel module 24 can read, from the first memory module 21, the first data in an access address of the first memory access signal. Similarly, the second memory module 22 responds to a second memory access signal, and the read channel module 24 can read, from the second memory module 24, the second data in an offset address of the access address. After being read by the read channel module 24, the first data and the second data are respectively transmitted to the data comparison module 25. The data comparison module 25 compares the first data with the second data to obtain a comparison result. The comparison result can include two results: the first data and the second data are the same or are different. When the first data and the second data are different, it indicates that a data error occurs and the data error signal needs to be sent. The read channel module 24 can be connected, for example, through a bus, to a processor. After being read by the read channel module 24, the first data can be transmitted to the processor through the bus, to be used by the processor. The data comparison module 25 can be connected to an error processing module that is within a chip and that is responsible for error processing, to transmit the data error signal to the error processing module. In this way, the error processing module is enabled to perform corresponding error processing in a timely manner, such as error diagnosis and error reporting. Details are not described again.

Optionally, data can be respectively read from the first memory module 21 and the second memory module 22 merely when the access address of the first memory access signal belongs to a preset level. When the access address does not belong to the preset level, only the first memory access signal is transmitted to the first memory module 21, and no second memory access signal is transmitted to the second memory module 22. Therefore, only the first memory module 21 responds to the first memory access signal, and the read channel module 24 reads the first data from the first memory module 21, and transmits the first data to the processor to achieve access at a lower safety level (such as ASILB). In this case, there are both an address range with a higher safety level and an address range with a lower safety level in the first memory module 21. In actual applications, the first memory module 21 and the second memory module 22 merely for access at higher safety levels can also be disposed according to actual requirements. In this case, the address ranges of the first memory module 21 are in one-to-one correspondence to those of the second memory module 22. This can be set according to actual requirements.

According to this disclosure, the first data read from the first memory module 21 is compared with the second data read from the second memory module 22, and the data error signal is determined based on the comparison result, thereby ensuring consistency between the first data and the second data. When the first data is inconsistent with the second data, it can be reported in a timely manner to achieve access safety at a higher safety level.

FIG. 4 is a schematic diagram of a structure of a read channel module 24 according to an exemplary embodiment of this disclosure.

In an optional example, the read channel module 24 includes a first bus interface circuit 241 and a second bus interface circuit 242.

The first bus interface circuit 241 is connected to the first memory module 21; and it is configured to receive the first data read from the first memory module 21, and transmit the first data to the processor and the data comparison module 25. The second bus interface circuit 242 is connected to the second memory module 22; and it is configured to receive the second data read from the second memory module 22, and transmit the second data to the data comparison module 25.

Both the first bus interface circuit 241 and the second bus interface circuit 242 can be any implementable bus interface circuit. This can be set according to actual requirements. For example, the first bus interface circuit 241 and the second bus interface circuit 242 can be bus interface circuits that support bus protocols such as AXI, AHB, APB, and CHI.

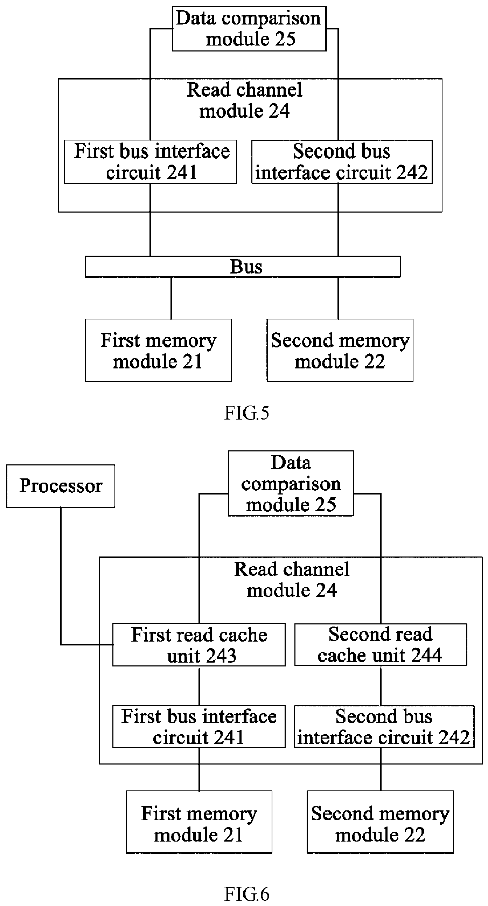

For example, FIG. 5 is a schematic diagram of a structure of a read channel module 24 according to another exemplary embodiment of this disclosure. In this example, the first bus interface circuit 241 and the second bus interface circuit 242 are respectively connected to the first memory module 21 and the second memory module 22 through a bus, to read the first data and the second data.

According to this disclosure, data is read from two memory modules respectively by using two bus interface circuits, to achieve parallel processing of two access operations, thereby improving access efficiency.

FIG. 6 is a schematic diagram of a structure of a read channel module 24 according to still another exemplary embodiment of this disclosure.

In an optional example, the read channel module 24 further includes a first read cache unit 243 and a second read cache unit 244.

The first read cache unit 243 is respectively connected to the processor, the first bus interface circuit 241, and the data comparison module 25; and it is configured to cache the first data received by the first bus interface circuit 241, and output the first data to the processor and the data comparison module 25. The second read cache unit 244 is respectively connected to the second bus interface circuit 242 and the data comparison module 25; and it is configured to cache the second data received by the second bus interface circuit 242, and output the second data to the data comparison module 25.

The first read cache unit 243 and the second read cache unit 244 can be any implementable cache memories, such as static random-access memories (SRAM as an acronym). This can be specifically set according to actual requirements. The first bus interface circuit 241 reads the first data from the first memory module 21 and then cache the first data into the first read cache unit 243. The first read cache unit 243 transmits the first data to the processor and the data comparison module 25. The second bus interface circuit 242 reads the second data from the second memory module 22 and then cache the second date into the second read cache unit 244. The second read cache unit 244 transmits the second data to the data comparison module 25 to be compared with the first data.

Optionally, the first read cache unit 243 can be connected to the processor through a bus, and the processor obtains the first data from the first read cache unit 243 through the bus.

According to this disclosure, two read cache units are respectively configured to cache the data read from the two memory modules, which can effectively ensure synchronization between the first data and the second data that are input to the data comparison module 25, thereby facilitating response to bus backpressure. For example, possibly due to a busy bus, the first data has been read while the second data has not yet been read. In this case, data comparison cannot be performed. Through caching, the first data that has been read can be cached first, and the data comparison module 25 is triggered to work after the second data is cached.

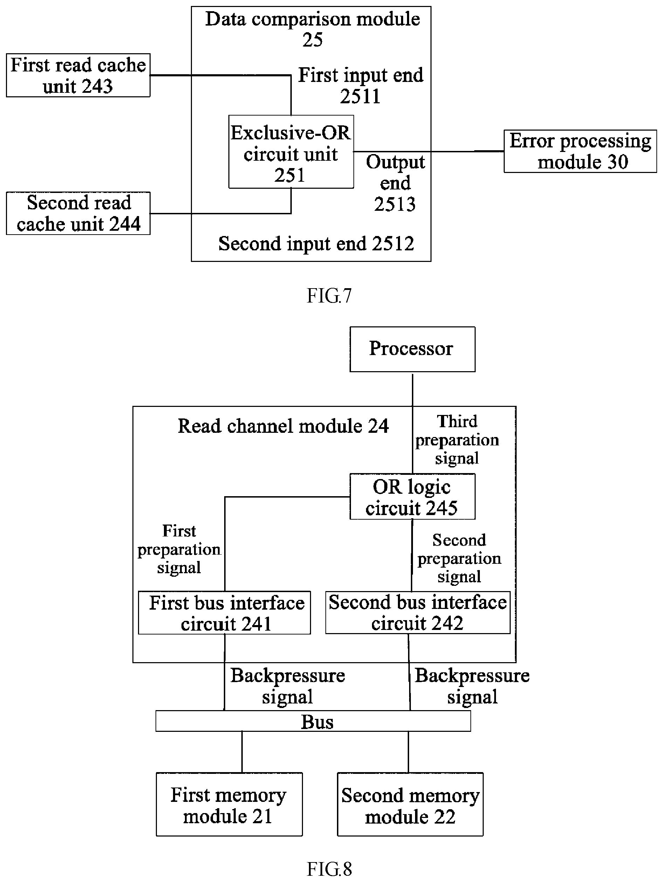

FIG. 7 is a schematic diagram of a structure of a data comparison module 25 according to an exemplary embodiment of this disclosure.

In an optional example, the data comparison module 25 includes an exclusive-OR circuit unit 251. The exclusive-OR circuit unit 251 includes a first input end 2511, a second input end 2512, and an output end 2513.

The first input end 2511 is connected to the first read cache unit 243, and is configured to input the first data. The second input end 2512 is connected to the second read cache unit 244, and is configured to input the second data. The output end 2513 is connected to an error processing module 30, and is configured to output the data error signal to the error processing module 30.

The exclusive-OR circuit unit 251 performs exclusive-OR logic processing based on the first data input by the first input end 2511 and the second data input by the second input end 2512. To be specific, when the first data is different from the second data, an output result is 1, which serves as the data error signal. Specific implementation of exclusive-OR logic is not described herein.

According to this disclosure, the first data is compared with the second data by using an exclusive-OR logical unit. When the first data is different from the second data, the data error signal is sent to ensure safety of memory access.

FIG. 8 is a schematic diagram of a structure of a read channel module 24 according to yet another exemplary embodiment of this disclosure.

In an optional example, the read channel module 24 further includes an OR logic circuit 245.

The first bus interface circuit 241 is further connected to the OR logic circuit 245. The first bus interface circuit 241 is further configured to receive a backpressure signal of a bus, and output a first preparation signal to the OR logic circuit 245. The second bus interface circuit 242 is further connected to the OR logic circuit 245. The second bus interface circuit 242 is further configured to receive the backpressure signal of the bus, and output a second preparation signal to the OR logic circuit. The OR logic circuit 245 is configured to output a third preparation signal to the processor in response to the first preparation signal and/or the second preparation signal. The third preparation signal is used to notify the processor not to initiate a read-write operation.

The bus refers to a bus that connects the first bus interface circuit 241 and the second bus interface circuit 242 to the first memory module 21 and the second memory module 22. The backpressure signal indicates that an inlet flow of the bus is greater than an outlet flow. After receiving the backpressure signal of the bus, the first bus interface circuit 241 outputs the first preparation signal to the OR logic circuit 245, indicating that a read-write operation is not initiated temporarily. For example, the first preparation signal may be represented by a low level or "0". The same applies to the second preparation signal of the second bus interface circuit 242, and details are not described again. After receiving the first preparation signal of the first bus interface circuit 241 and/or the second preparation signal of the second bus interface circuit 242, the OR logic circuit 245 outputs the third preparation signal to the processor. The third preparation signal is used to notify the processor not to initiate the read-write operation. The third preparation signal can also be represented by a low level or "0". To be specific, a function implemented by the OR logic circuit 245 is to output 0 if any one of the two input ends is input with 0.

In actual applications, preparation signals (including the first preparation signal, the second preparation signal, and the third preparation signal) are implemented through a ready signal in a handshake protocol. When the ready signal is set high (being 1), it indicates that the read-write operation can be initiated. When the ready signal is set low (being 0), it indicates that the read-write operation is not initiated. Certainly, the handshake protocol also includes a valid signal. A specific handshake principle is not described. In actual applications, the preparation signals can also be implemented by different representations through protocols, provided that a corresponding purpose can be achieved. This is not limited in this disclosure.

According to this disclosure, when any bus interface circuit (the first bus interface circuit 241 and/or the second bus interface circuit 242) receives the backpressure signal of the bus, the OR logic circuit can send a notification to the processor to notify the processor not to initiate the read-write operation, thereby alleviating bus pressure.

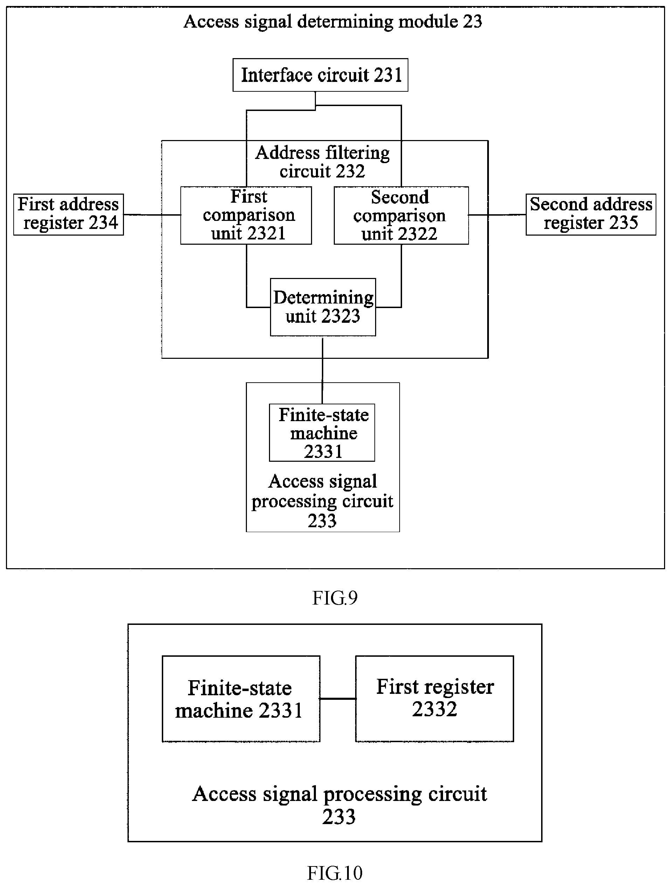

FIG. 9 is a schematic diagram of a structure of an access signal determining module 23 according to an exemplary embodiment of this disclosure.

In an optional example, the access signal determining module 23 further includes a first address register 234 and a second address register 235.

The first address register 234 is configured to store an upper bound value of an address range corresponding to the preset level. The second address register 235 is configured to store a lower bound value of the address range corresponding to the preset level. The address filtering circuit 232 includes a first comparison unit 2321, a second comparison unit 2322, and a determining unit 2323.

The first comparison unit 2321 is respectively connected to the interface circuit 231 and the first address register 234; and it is configured to compare the access address of the first memory access signal received by the interface circuit 231 with the upper bound value in the first address register 234, to obtain a first comparison result. The second comparison unit 2322 is respectively connected to the interface circuit 231 and the second address register 235; and it is configured to compare the access address of the first memory access signal received by the interface circuit 231 with the lower bound value in the second address register 235, to obtain a second comparison result. The determining unit 2323 is respectively connected to the first comparison unit 2321, the second comparison unit 2322, and the access signal processing circuit 233; and it is configured to output a safety level matching state to the access signal processing circuit 233 based on the first comparison result and the second comparison result. The safety level matching state includes two states: the target safety level matches or does not match the preset level.

The upper bound value and the lower bound value of the address range corresponding to the preset level can be respectively configured to the first address register 234 and the second address register 235 in advance. A specific configuration manner is not limited. For example, the register can be configured by using a main processor of the chip. For example, if the address range corresponding to the preset level is 0-1000, a binary value corresponding to an upper bound value 0 can be written to the first address register 234, and a binary value corresponding to 1000 can be written to the second address register 235. Details are not described. The first comparison unit 2321 can be compared with the second comparison unit 2322 by using a comparator. This can be specifically set according to actual requirements. The first comparison result can include three cases: the access address is less than the upper bound value, is equal to the upper bound value, or is greater than the upper bound value. The second comparison result can include three cases: the access address is greater than the lower bound value, is equal to the lower bound value, or is less than the lower bound value. Alternatively, according to actual requirements, the cases, in the first comparison result, that the access address is less than the upper bound value and is equal to the upper bound value are merged into one case. In other words, the access address is less than or equal to the upper bound value. The cases, in the second comparison result, that the access address is greater than the lower bound value and is equal to the lower bound value are merged into one case. In other words, the access address is greater than or equal to the lower bound value. This can be specifically set according to actual requirements. Different cases can be represented by different outputs. For example, for the first comparison unit 2321, when it is determined that the access address is less than or equal to the upper bound value, the output first comparison result is 1, or otherwise, the output first comparison result is 0. When the second comparison unit 2322 determines that the access address is greater than or equal to the lower bound value, the output second comparison result is 1, or otherwise, the output second comparison result is 0. On this basis, the determining unit 2323 can determine the safety level matching state based on different cases of the first comparison result and the second comparison result. The safety level matching state can include two states: matching and mismatching. Different states can be represented by different symbols. For example, matching is represented by 1, and mismatching is represented by 0. When the first comparison result is 1 and the second comparison result is 1, it indicates that the access address is within the address range corresponding to the preset level, and thus, the safety level matching state is 1. In this case, the determining unit 2323 can be implemented by using an AND logic circuit. To be specific, 1 is output when two inputs both are 1. In actual applications, specific implementation manners for the first comparison unit 2321, the second comparison unit 2322, and the determining unit 2323 can be set according to actual requirements, which are not limited to the manners shown above.

In this disclosure, comparison basis is respectively provided for the first comparison unit 2321 and the second comparison unit 2322 through the first address register 234 and the second address register 235 to which the address range corresponding to the preset level is pre-configured, so as to recognize an access address with a higher safety level. In this way, the access address is provided with memory access that meets safety requirements with higher safety levels, thereby further ensuring functional safety.

In an optional example, the access signal processing circuit 233 includes a finite-state machine 2331 that is connected to the determining unit 2323 and is configured to add the access address of the first memory access signal to preset offset information to obtain the offset address when the safety level matching state is matching, obtain the second memory access signal based on the offset address, and transmit the second memory access signal to the second memory module 22.

The finite-state machine 2331 can be referred to as FSM as an acronym. A function of the finite-state machine 2331 is to describe a sequence of states experienced by an object during a life cycle of the object and how the object responds to an external event. In this disclosure, the fine-state machine 2331 makes different responses based on different safety level matching states output by the determining unit 2323. When the safety level matching state is matching (for example, being 1), the access address of the first memory access signal is added with the preset offset information to obtain the offset address, and further, the second memory access signal is determined based on the offset address, and is transmitted to the second memory module 22. The first memory access signal can be obtained from the address filtering circuit 232, or can be obtained from the interface circuit 231. This can be specifically set according to actual requirements. The preset offset information can be pre-configured into the register. The final state machine 2331 can obtain the preset offset information from the register to offset the access address of the first memory access signal, obtain the offset address, determine the second memory access signal based on the offset address, and transmit the second memory access signal to the second memory module 22.

In an optional example, the access signal processing circuit 233 can also be implemented in other manners, not limited to the foregoing implementation manners of the fine-state machine 2331.

FIG. 10 is a schematic diagram of a structure of an access signal processing circuit 233 according to an exemplary embodiment of this disclosure.

In an optional example, the access signal processing circuit 233 further includes a first register 2332 that is connected to the finite-state machine 2331, and is configured to store the preset offset information.

The preset offset information can be configured into the first register 2332 at any possible time. For example, the preset offset information can be configured by using a main processor of the chip every time the chip is started. This can be specifically set according to actual requirements, and is not limited in this disclosure.

In an optional example, the preset offset information can also be updated at any time according to actual requirements. For example, if new address ranges are set for the first memory module 21 and the second memory module 22 by updating address coding of a memory, new preset offset information is written into the first register 2332 based on an offset relationship of the new address ranges. This can be specifically set according to actual requirements.

In this disclosure, the preset offset information is stored by using the first register 2332, which facilitates a user to configure the preset offset information according to actual requirements, thereby improving universality and user experience.

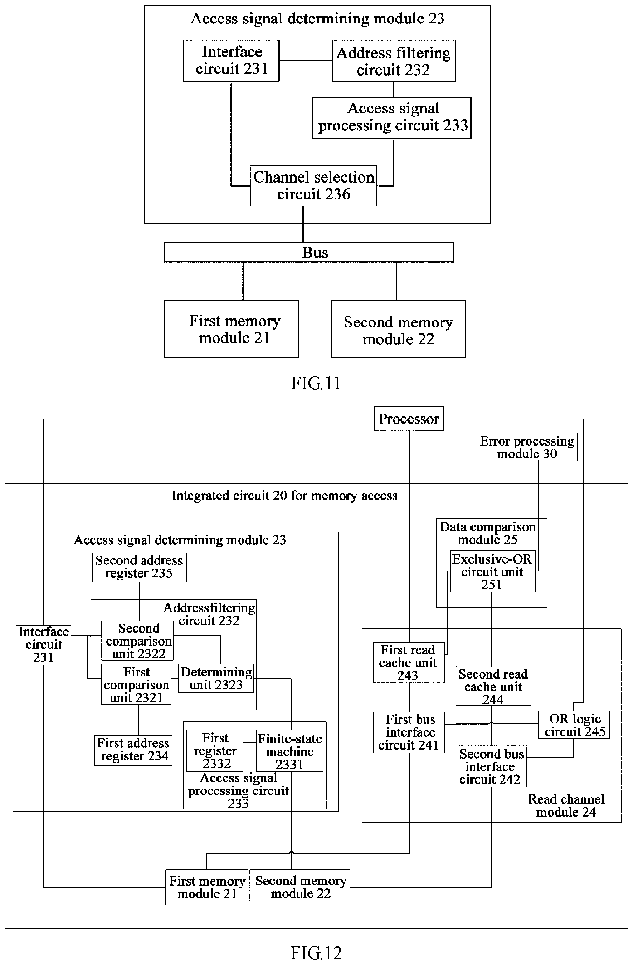

FIG. 11 is a schematic diagram of a structure of an access signal determining module 23 according to another exemplary embodiment of this disclosure.

In an optional example, the access signal determining module 23 further includes a channel selection circuit 236 that is respectively connected to the interface circuit 231 and the access signal processing circuit 233, and is configured to transmit the first memory access signal and the second memory access signal through channel selection.

The channel selection circuit 236 is respectively connected to the first memory module 21 and the second memory module 22 through a bus. The channel selection circuit 236 can perform channel selection in any implementable manner. For example, channel switching can be performed by using a multiplexer (MUX), so as to transmit the first memory access signal and the second memory access signal to the first memory module 21 and the second memory module 22, respectively. Details are not described.

Optionally, when the channel selection circuit 236 exists, whether the channel selection circuit 236 performs transmission once or twice can be determined based on output of the fine-state machine 2331. Performing transmission once refers to that no second memory access signal is generated through address offset when the access address does not belong to the address range with the preset level, and the channel selection circuit 236 directly switches to a channel of the interface circuit 231 to transmit the first memory access signal to the first memory module 21. Performing transmission twice refers to that both the first memory access signal and the second memory access signal need to be sent when the access address belongs to the address range with the preset level, and thus the channel selection circuit 236 needs perform transmission twice. In this case, First, the first memory access signal can be transmitted to the first memory module 21 on the channel of the interface circuit 231, and then a channel of the access signal processing circuit 233 is switched to, so as to transmit the second memory access signal to the second memory module 22.

In this disclosure, the first memory access signal and the second memory access signal are transmitted by using the channel selection circuit 236. In this way, compared to that the interface circuit 231 and the access signal processing circuit 233 are respectively connected to the first memory module 21 and the second memory module 22 through a bus (To be specific, the interface circuit 231 requires a bus interface to be connected to the bus, and the bus is connected to the first memory module 21 through a bus interface; the access signal processing circuit 233 requires a bus interface to be connected to the bus, and the bus is connected to the second memory module 22 through a bus interface. A total of 4 bus interfaces are required), two memory access signals are transmitted by using one bus interface (To be specific, the channel selection circuit is connected to the bus through a bus interface, and the bus is respectively connected to the first memory module 21 and the second memory module 22 through two bus interfaces. A total of three bus interfaces are required), so that one bus interface can be reduced.

The foregoing embodiments or optional examples of this disclosure can be implemented separately or in any combination without conflict. Details are not described herein again.

In an optional example, FIG. 12 is a schematic diagram of a structure of an integrated circuit for memory access, which is combinatorial implementation, according to still another exemplary embodiment of this disclosure. In this example, the integrated circuit 20 includes a first memory module 21, a second memory module 22, an access signal determining module 23, a read channel module 24, and a data comparison module 25. For specific implementation and functions of each module, refer to the foregoing embodiments or optional examples, and details are not described herein again.

The structural diagrams in the accompanying drawings of this disclosure are all schematic connection diagrams. In actual implementation, layout of each part in the integrated circuit can be set according to actual requirements. This is not limited in this disclosure.

Each component of the integrated circuit in this disclosure can be partially or entirely implemented through hardware logic to ensure real-time performance. This can be set according to actual requirements.

According to the integrated circuit for memory access provided in the embodiments, a software-insensitive processor access operation can be performed through hardware address offset, and two memory controllers (such as DDR controllers) can be controlled at the same time to decompose access with a higher safety level (such as the ASILD level) into two independent data access paths with lower safety levels (such as the ASILB level). In this way, a storage capacity is provided for a scenario with a higher safety level based on the memory device with a lower safety level, thereby effectively meeting storage requirements of the scenario with a higher safety level.

### Exemplary method

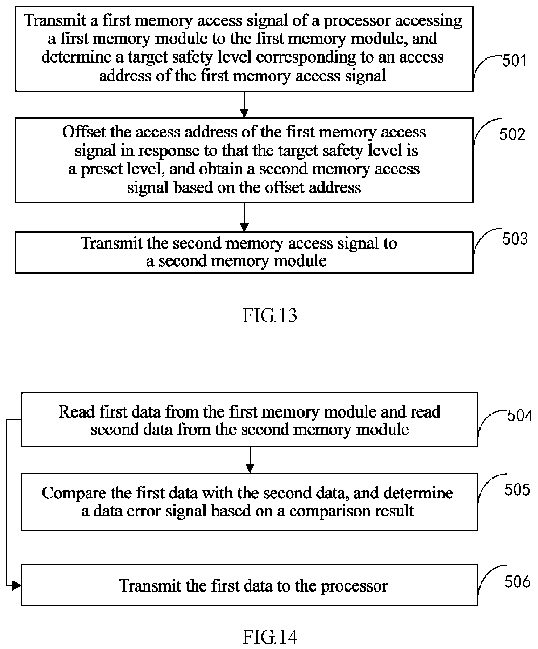

FIG. 13 is a schematic flowchart of a processing method for memory access according to an exemplary embodiment of this disclosure. This embodiment can be applicable to any electronic device that requires memory access with a higher safety level, such as a chip. As shown in FIG. 13, the method includes the following steps.

Step 501, transmit a first memory access signal of a processor accessing a first memory module to the first memory module, and determine a target safety level corresponding to an access address of the first memory access signal.

Step 502, offset the access address of the first memory access signal in response to that the target safety level is a preset level, and obtain a second memory access signal based on the offset address.

Step 503, transmit the second memory access signal to a second memory module.

For specific operations of the steps in this embodiment, refer to the embodiments described above, and details are not described herein again.

FIG. 14 is a schematic flowchart of a processing method for memory access according to another exemplary embodiment of this disclosure.

In an optional example, the method in this disclosure further includes the following steps.

Step 504, read first data from the first memory module and read second data from the second memory module.

Step 505, compare the first data with the second data, and determine a data error signal based on a comparison result.

In an optional example, after step 504 of reading the first data from the first memory module, the method further includes:
Step 506, transmit the first data to a processor.

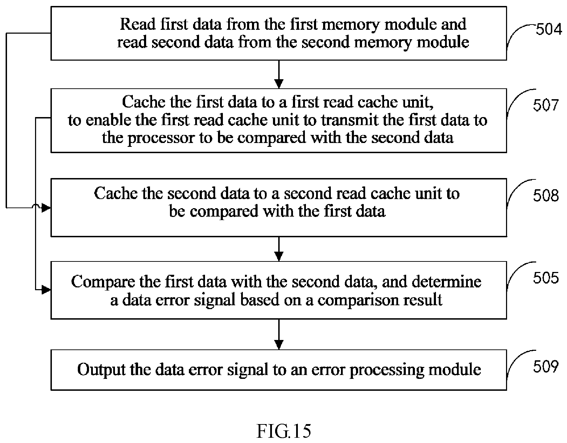

FIG. 15 is a schematic flowchart of a processing method for memory access according to still another exemplary embodiment of this disclosure.

In an optional example, after step 504 of reading the first data from the first memory module and reading the second data from the second memory module, the method further includes the following steps.

Step 507, cache the first data to a first read cache unit, to enable the first read cache unit to transmit the first data to the processor to be compared with the second data.

Step 508, cache the second data to a second read cache unit to be compared with the first data.

In an optional example, after step 505 of comparing the first data with the second data and determining the data error signal based on the comparison result, the method further includes:

Step 509, output the data error signal to an error processing module.

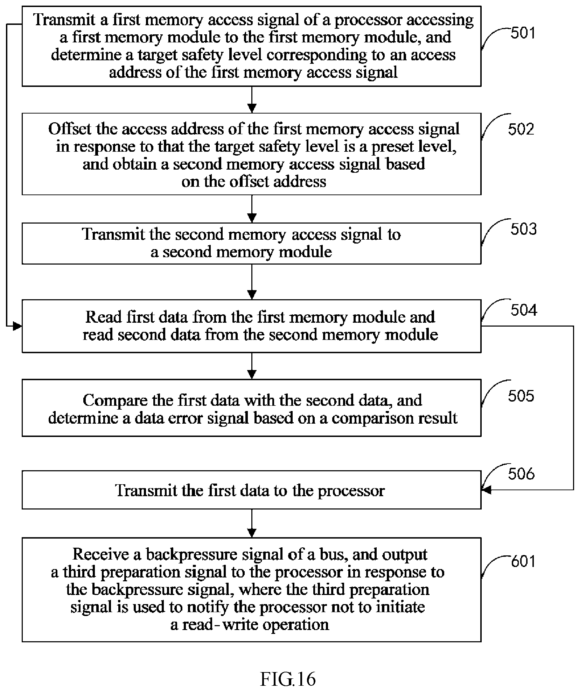

FIG. 16 is a schematic flowchart of a processing method for memory access according to yet another exemplary embodiment of this disclosure.

In an optional example, the method in this disclosure further includes the following steps.

Step 601, receive a backpressure signal of a bus, and output a third preparation signal to the processor in response to the backpressure signal, wherein the third preparation signal is used to notify the processor not to initiate a read-write operation.

Steps 601 and the foregoing steps are not in a sequential order.

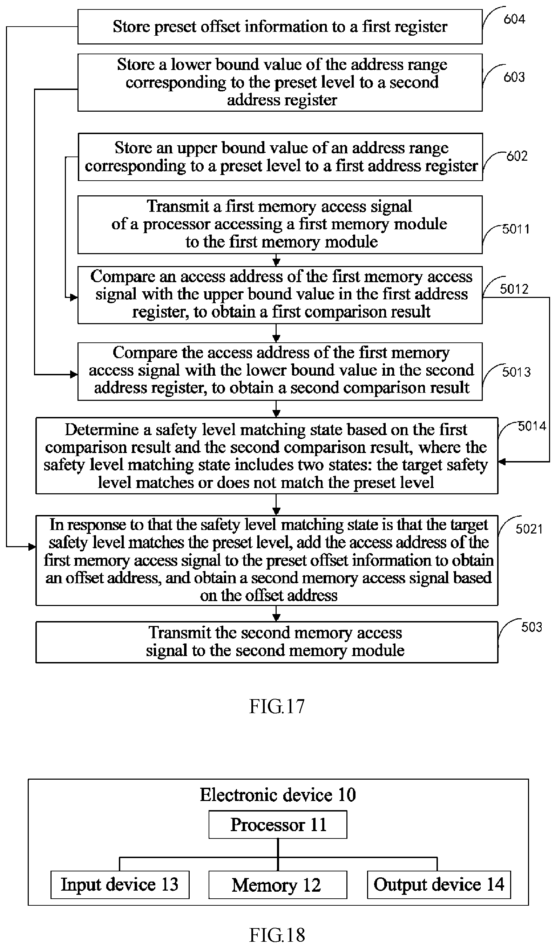

FIG. 17 is a schematic flowchart of a processing method for memory access according to still another exemplary embodiment of this disclosure.

In an optional example, the method in this disclosure further includes the following steps.

Step 602, store an upper bound value of an address range corresponding to a preset level to a first address register.

Specifically, the upper bound value of the address range corresponding to the preset level can be stored to the first address register in response to a first write instruction of the processor. The first write instruction can be triggered by a user through a terminal device, and specific configuration manners of the register are not limited.

Step 603, store a lower bound value of the address range corresponding to the preset level to a second address register.

For specific configurations of the register, refer to the first address register, and details are not described herein again.

Step 501 of transmitting the first memory access signal of the processor accessing the first memory module to the first memory module, and determining the target safety level corresponding to the access address of the first memory access signal includes the following steps.

Step 5011, transmit the first memory access signal of the processor accessing the first memory module to the first memory module.

Step 5012, compare the access address of the first memory access signal with the upper bound value in the first address register, to obtain a first comparison result.

Step 5013, compare the access address of the first memory access signal with the lower bound value in the second address register, to obtain a second comparison result.

Step 5014, determine a safety level matching state based on the first comparison result and the second comparison result, wherein the safety level matching state includes two states: the target safety level matches or does not match the preset level.

Steps 5011 and 5012 are not in a sequential order.

In an optional example, step 502 of offsetting the access address of the first memory access signal in response to that the target safety level is the preset level, and obtaining the second memory access signal based on the offset address includes:

Step 5021, in response to that the safety level matching state is that the target safety level matches the preset level, add the access address of the first memory access signal to preset offset information to obtain the offset address, obtain the second memory access signal based on the offset address, and transmit the second memory access signal to the second memory module.

In an optional example, the method in this disclosure further includes:

Step 604, store the preset offset information to a first register.

A configuration principle of the first register is similar to that of the first address register, and details are not described herein again.

In an optional example, the method in this disclosure further includes: transmitting the first memory access signal and the second memory access signal through channel selection.

For specific operations of the steps in the method embodiments of this disclosure, refer to the embodiments of the integrated circuit described above, and details are not described herein again.

Any processing method for memory access provided in the embodiments of this disclosure can be implemented by any suitable device with a data processing capability, including but not limited to a terminal device and a server. Alternatively, any processing method for memory access provided in the embodiments of this disclosure can be implemented by the processor. For example, the processor implements any processing method for memory access described in the embodiments of this disclosure by invoking corresponding instructions stored in a memory. Details are not described below again.

### Exemplary electronic device

An embodiment of this disclosure further provides an electronic device, including: a memory, configured to store a computer program; and
a processor, configured to execute the computer program stored in the memory, and when the computer program is executed, to implement the processing method for memory access according to any one of the foregoing embodiments of this disclosure.

FIG. 18 is a schematic diagram of a structure of an electronic device according to an application embodiment of this disclosure. In this embodiment, an electronic device 10 includes one or more processors 11 and a memory 12.

The processor 11 may be a central processing unit (CPU) or other forms of processing units having a data processing capability and/or an instruction execution capability, and can control other components in the electronic device 10 to perform desired functions.

The memory 12 can include one or more computer program products. The computer program product can include various forms of computer readable storage media, such as a volatile memory and/or a non-volatile memory. The volatile memory can include, for example, a random access memory (RAM) and/or a cache. The nonvolatile memory can include, for example, a read-only memory (ROM), a hard disk, and a flash memory. One or more computer program instructions can be stored on the computer readable storage medium. The processor 11 can execute the program instruction to implement the method according to various embodiments of this disclosure that are described above and/or other desired functions. Various contents such as an input signal, a signal component, and a noise component can also be stored in the computer readable storage medium.

In an example, the electronic device 10 can further include an input device 13 and an output device 14. These components are connected to each other through a bus system and/or other forms of connection mechanisms (not shown).

For example, the input device 13 may be a microphone or a microphone array, which is configured to capture an input signal of a sound source.

In addition, the input device 13 can further include, for example, a keyboard and a mouse.

The output device 14 can output various information to the outside, including determined distance information, direction information, and the like. The output device 14 can include, for example, a display, a speaker, a printer, a communication network, and a remote output device connected by the communication network.

Certainly, for simplicity, FIG. 18 shows only some of components in the electronic device 10 that are related to this disclosure, and components such as a bus and an input/output interface are omitted. In addition, according to specific application situations, the electronic device 10 can further include any other appropriate components.

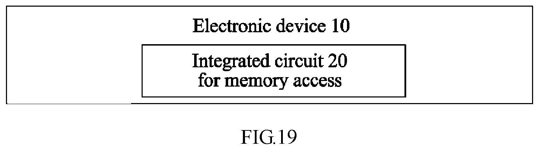

In an optional example, FIG. 19 is a schematic diagram of a structure of an electronic device according to another application embodiment of this disclosure. In this embodiment, the electronic device 10 includes the integrated circuit 20 for memory access provided in any one of the foregoing embodiments or optional examples.

### Exemplary computer program product and computer readable storage medium

In addition to the foregoing method and device, the embodiments of this disclosure can also relate to a computer program product, which includes computer program instructions. When the computer program instructions are run by a processor, the processor is enabled to perform the steps, of the method according to the embodiments of this disclosure, that are described in the "exemplary method" part of this specification.

Basic principles of this disclosure are described above in combination with specific embodiments. However, it should be pointed out that the advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

The various embodiments in this specification are all described in a progressive way, and each embodiment focuses on a difference from other embodiments. For same or similar parts among the various embodiments, reference can be made to each other. The system embodiments basically correspond to the method embodiments, and thus are relatively simply described. For related parts, reference can be made to a part of the descriptions of the method embodiments.

The block diagrams of the equipment, the apparatus, the device, and the system involved in this disclosure are merely exemplary examples and are not intended to require or imply that the equipment, the apparatus, the device, and the system must be connected, arranged, and configured in the manners shown in the block diagrams. It is recognized by a person skilled in the art that, the equipment, the apparatus, the device, and the system can be connected, arranged, and configured in an arbitrary manner.

The method and the apparatus in this disclosure can be implemented in many ways. For example, the method and the apparatus in this disclosure can be implemented by software, hardware, firmware, or any combination of the software, the hardware, and the firmware. The foregoing sequence of the steps of the method is for illustration only, and the steps of the method in this disclosure are not limited to the sequence specifically described above, unless otherwise specifically stated in any other manner. In addition, in some embodiments, this disclosure can also be implemented as programs recorded in a recording medium. These programs include machine-readable instructions for implementing the method according to this disclosure. Therefore, this disclosure further relates to a recording medium storing a program for implementing the method according to this disclosure.

It should be further pointed out that, various components or various steps in the apparatus, the device, and the method of this disclosure can be disassembled and/or recombined. These disassembling and/or recombinations shall be regarded as equivalent solutions of this disclosure.

## Claims

1. An integrated circuit for memory access, comprising a first memory module, a second memory module, and an access signal determining module, wherein the access signal determining module is respectively connected to the first memory module and the second memory module, and the access signal determining module comprises:
an interface circuit, configured to transmit a first memory access signal of a processor accessing the first memory module to the first memory module;
an address filtering circuit, connected to the interface circuit, and configured to determine a target safety level corresponding to an access address of the first memory access signal; and
an access signal processing circuit, connected to the address filtering circuit, and configured to offset the access address of the first memory access signal in response to that the target safety level is a preset level, obtain a second memory access signal based on the offset address, and transmit the second memory access signal to the second memory module.

2. The integrated circuit according to claim 1, further comprising:
a read channel module, configured to read first data from the first memory module and read second data from the second memory module; and
a data comparison module, configured to compare the first data with the second data, and determine a data error signal based on a comparison result.

3. The integrated circuit according to claim 2, wherein the read channel module comprises:
a first bus interface circuit, connected to the first memory module, and configured to receive the first data read from the first memory module, and transmit the first data to the processor and the data comparison module; and
a second bus interface circuit, connected to the second memory module, and configured to receive the second data read from the second memory module, and transmit the second data to the data comparison module.

4. The integrated circuit according to claim 3, wherein the read channel module further comprises:
a first read cache unit, respectively connected to the processor, the first bus interface circuit, and the data comparison module, and configured to cache the first data received by the first bus interface circuit, and output the first data to the processor and the data comparison module; and
a second read cache unit, respectively connected to the second bus interface circuit and the data comparison module, and configured to cache the second data received by the second bus interface circuit, and output the second data to the data comparison module.

5. The integrated circuit according to claim 4, wherein the data comparison module comprises an exclusive-OR circuit unit, and the exclusive-OR circuit unit comprises a first input end, a second input end, and an output end;
the first input end is connected to the first read cache unit, and is configured to input the first data;
the second input end is connected to the second read cache unit, and is configured to input the second data; and
the output end is connected to an error processing module, and is configured to output the data error signal to the error processing module.

6. The integrated circuit according to claim 3, wherein the read channel module further comprises an OR logic circuit;
the first bus interface circuit is further connected to the OR logic circuit, and is further configured to receive a backpressure signal of a bus, and output a first preparation signal to the OR logic circuit;
the second bus interface circuit is further connected to the OR logic circuit, and is further configured to receive the backpressure signal of the bus, and output a second preparation signal to the OR logic circuit; and
the OR logic circuit is configured to output a third preparation signal to the processor in response to the first preparation signal and/or the second preparation signal, wherein the third preparation signal is used to notify the processor not to initiate a read-write operation.

7. The integrated circuit according to claim 1, wherein the access signal determining module further comprises:
a first address register, configured to store an upper bound value of an address range corresponding to the preset level; and
a second address register, configured to store a lower bound value of the address range corresponding to the preset level; and
the address filtering circuit comprises:
a first comparison unit, respectively connected to the interface circuit and the first address register, and configured to compare the access address of the first memory access signal received by the interface circuit with the upper bound value in the first address register, to obtain a first comparison result;
a second comparison unit, respectively connected to the interface circuit and the second address register, and configured to compare the access address of the first memory access signal received by the interface circuit with the lower bound value in the second address register, to obtain a second comparison result; and
a determining unit, respectively connected to the first comparison unit, the second comparison unit, and the access signal processing circuit, and configured to output a safety level matching state to the access signal processing circuit based on the first comparison result and the second comparison result, wherein the safety level matching state comprises two states: the target safety level matches or does not match the preset level.

8. The integrated circuit according to claim 7, wherein the access signal processing circuit comprises:
a finite-state machine, connected to the determining unit, and configured to add the access address of the first memory access signal to preset offset information to obtain the offset address when the safety level matching state is that the target safety level matches the preset level, obtain the second memory access signal based on the offset address, and transmit the second memory access signal to the second memory module.

9. The integrated circuit according to claim 8, wherein the access signal processing circuit further comprises:
a first register, connected to the finite-state machine, and configured to store the preset offset information.

10. The integrated circuit according to claim 1, wherein the access signal determining module further comprises:
a channel selection circuit, respectively connected to the interface circuit and the access signal processing circuit, and configured to transmit the first memory access signal and the second memory access signal through channel selection.

11. A processing method for memory access, comprising:
transmitting a first memory access signal of a processor accessing a first memory module to the first memory module, and determining a target safety level corresponding to an access address of the first memory access signal;
offsetting the access address of the first memory access signal in response to that the target safety level is a preset level, and obtaining a second memory access signal based on the offset address; and
transmitting the second memory access signal to a second memory module.

12. The processing method for memory access according to claim 11, wherein the processing method further comprises:
reading first data from the first memory module and read second data from the second memory module; and
comparing the first data with the second data, and determine a data error signal based on a comparison result.

13. The processing method for memory access according to claim 12, after reading the first data from the first memory module, the processing method further comprises:
transmitting the first data to a processor.

14. A computer readable storage medium, wherein the storage medium stores a computer program, and the computer program is used for implementing the processing method for memory access according to any one of claims 11-13.

15. An electronic device, wherein the electronic device comprises:
a processor; and
a memory, configured to store processor-executable instructions,
wherein the processor is configured to read the executable instructions from the memory, and execute the instructions to implement the processing method for memory access according to any one of claims 11-13;
or
the electronic device comprises:
the integrated circuit for memory access according to any one of claims 1 to 10.
